# EUROPEAN PATENT SPECIFICATION

(11) **EP 2 706 451 B1**
(45) Date of publication and mention of the grant of the patent: **25.05.2016**
(21) Application number: 13183442.6
(22) Date of filing: 06.09.2013
(51) Int. Cl.: G06F 3/0488

(54) **Method of processing touch input for mobile device**
Verfahren zur Verarbeitung von Berührungseingaben für mobile Vorrichtungen
Procédé de traitement de saisie tactile pour dispositif mobile

(30) Priority: 06.09.2012 IN KO10252012; 18.09.2012 KR 20120103069
(43) Date of publication of application: 12.03.2014
(73) Proprietor: Samsung Electronics Co., Ltd, Gyeonggi-do 443-742 (KR)
(72) Inventor: Kang, Yeongu, Gyeonggi-do 443-742 (KR); Poojary, Namitha, Gyeonggi-do 443-742 (KR); Purre, Naresh, Gyeonggi-do 443-742 (KR); Neeli, Siva Krishna, Gyeonggi-do 443-742 (KR); Vala, Vanraj, Gyeonggi-do 443-742 (KR)
(74) Representative: Jenkins, Richard Gavin

(56) References cited:
- EP-A1- 1 457 864
- US-A1- 2006 007 178
- US-A1- 2007 213 090
- US-A1- 2010 259 561
- US-A1- 2011 310 019

## Description

### BACKGROUND

### Technical Field

The present disclosure relates to a touchscreen-enabled mobile device and a touchscreen input processing method thereof for reducing a touch input error rate of the touchscreen.

### Description of the Related Art

Conventional mobile devices, such as smartphones and tablet PCs, may be provided with a touchscreen which generates a touch event signal in response to a user's touch for controlling the operation of a user-selected function. Typically, a mobile device provides any of various touch keypads (for example, an English QWERTY keypad, an English 3x4 keypad, a Korean 3x4 keypad, or another type of keypad) on the touchscreen. If the user applies a touch to a key of the virtual keypad presented on the touchscreen, the touchscreen generates a touch event signal to the controller. Here, the touch event signal includes the coordinates of the position on the touchscreen where the touch has been applied. The controller of the portable device extracts the touch coordinates, retrieves a key value corresponding to the touch coordinates from a key value table, and executes the function corresponding to the key value (for example, by displaying the letter "A").

In the case of conventional touch input-processing methods, the user is required to adapt to the keypad since the key values are fixed to the corresponding touch coordinates. For example, if the user has a habit of touching the right-hand edge or periphery of a key, this habit may sometimes result in an unintended activation of the key to the immediate right of the desired target key. This unintended touch causes a touch input error. The user will be required to perform a tedious, cumbersome error correction procedure whenever the touch input error occurs, resulting in delay and frustration.

US2011/310019 A1 discloses an approach for reconfiguring a virtual keyboard, where historical touch interactions with the keyboard are used to configure the locations and dimensions of the keys of the keyboard.

EP1457864 A1 discloses an input device that can prevent or reduce incorrect inputs on adjacent keys on a touch screen software keyboard.

US2010/259561 A1 discloses a virtual keyboard generator with learning capabilities where a virtual keyboard on a touch sensitive surface may learn typing patterns of a user and configure the size, location and orientations of the keys of the keyboard to reduce user typing errors.

### SUMMARY

The invention is defined by the appended claims. In accordance with an aspect of the present disclosure, a method of processing a touch input for a mobile device reduces a touch input error rate and improves input speed by adjusting one or more key values mapped to coordinates on a touchscreen in adaptation to the user applying touches to the touchscreen.

In accordance with another aspect of the present disclosure, a method for processing a touch input applied to a mobile device equipped with a touchscreen includes displaying a keypad on the touchscreen; detecting a touch on the touchscreen; extracting, in response to the touch being released, a first set of coordinates for the touchscreen corresponding to the detected touch; executing a function corresponding to a first key value mapped to the first set of coordinates from a key value table corresponding to the keypad;; and updating the key value table by changing a second key value for a second set of coordinates to the first key value, the second set are within a predetermined threshold distance from the first set and the second key value is mapped to the second set.

In accordance with another aspect of the present disclosure, a mobile device includes a touchscreen which displays a keypad; a storage unit which stores a key value table corresponding to the keypad; and a control unit which detects a touch on the touchscreen, extracts, in response to the first touch being released, a first set of coordinates for the touchscreen corresponding to the detected touch, executes a function corresponding to a first key value mapped to the first set of coordinates from a key value table corresponding to the keypad, and updates the key value table by changing a second key value for a second set of coordinates to the first key value, the second set are within a predetermined threshold distance from the first set and the second key value is mapped to the second set.

### BRIEF DESCRIPTION OF THE DRAWINGS

FIG. 1 is a block diagram illustrating a configuration of a mobile device according to an exemplary embodiment of the present invention;
FIG. 2 is a flowchart illustrating a first touch input processing method for a mobile device according to an exemplary embodiment of the present invention;
FIG. 3 is a diagram illustrating a set of exemplary keypad images directed to the principle of processing a touch input using the touch input processing method of FIG. 2;
FIG. 4 is a flowchart illustrating a second touch input processing method for a mobile device according to another exemplary embodiment of the present invention; and
FIGs. 5 and 6 are diagrams illustrating sets of exemplary keypad images directed to the principle of processing a touch input using the touch input processing method of FIG. 4.

### DETAILED DESCRIPTION

A method for processing a touch input applied to a mobile device according to the present invention is described hereinafter in detail. The mobile device can be a portable electronic device equipped with a touchscreen, such as any of a mobile phone, a smartphone, a tablet PC, or a laptop PC.

Detailed descriptions of well-known functions and structures incorporated herein may be omitted to avoid obscuring the subject matter of the present invention. Terms and words used in the specification and claims may be regarded as concepts selected by the inventor as illustrating various exemplary embodiments of the present invention, and may be interpreted as having meanings and concepts adapted to the scope of the present invention. Therefore, the embodiments described in the specification and the constructions illustrated in the drawings correspond to exemplary embodiments, but do not necessarily represent the entire technical scope of the present invention. Accordingly, those of ordinary skill in the relevant art will understand and recognize that various equivalents, substitutions, and modifications could be made to the exemplary embodiments described herein, and these equivalents, substitutions, and modifications shall be considered to fall within the scope of the claimed invention. In the drawings, certain elements may be exaggerated or omitted or schematically depicted for clarity of the invention.

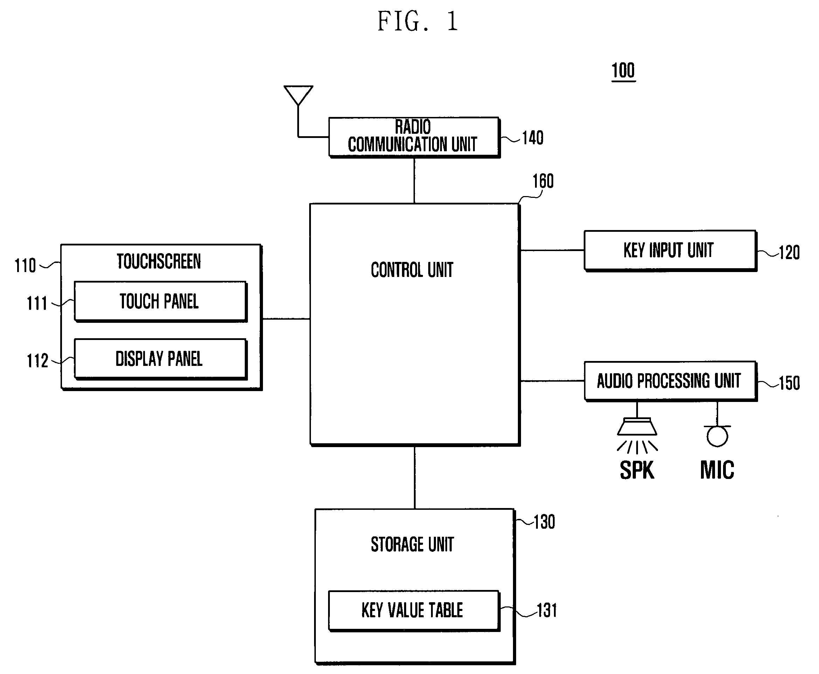

FIG. 1 is a block diagram illustrating a configuration of a mobile device according to an exemplary embodiment of the present invention. The mobile device 100 includes a touchscreen 110, a key input unit 120, a storage unit 130, a radio communication unit 140, an audio processing unit 150, a speaker (SPK), a microphone (MIC), and a control unit 160.

The touchscreen 110 includes a touch panel 111 and a display panel 112. The touch panel 111 may be placed on the display unit 111. For example, the touch panel 111 may, but need not, be implemented on the display panel 112 in in the form of an add-on panel, an on-cell panel, or an in-cell panel.

The touch panel 111 generates an analog signal in response to a touch applied by the user thereon, and converts the analog signal to a digital signal which is delivered to the control unit 160. The digital signal may be regarded as a touch event signal. Here, the touch event signal includes a set of touch coordinates (x, y). That is, the touchscreen 110 determines the touch coordinates based upon touch area (i.e. the area contacted by a user's finger or stylus) and sends the determined touch coordinates to the control unit 160. Alternatively or additionally, the touch panel 110 delivers sensed information to the control unit 160. The control unit 160 then determines a pair of coordinates from the received sensed information, and this pair of coordinates is regarded as a set of touch coordinates. Here, the touch coordinates may, but need not, be defined in terms of pixels. For example, if the touchscreen 110 has a resolution of 640x480, then the x coordinate has a value in the range from 0 to 640, and the y coordinate has a value in the range from 0 to 480.

The control unit 160 may extract a user touch gesture from the touch event signal. The control unit 160 controls the components in response to the user touch gesture. For example, a touch applied by a user may comprise any of a touch or a touch gesture. The touch gesture may comprise any of a tap, a drag, and a flick. The term "touch" denotes a contact being applied to the touchscreen, and the term "touch gesture" denotes a change in the contact being applied to the touchscreen while the user touches to the touchscreen, such as the user moving their finger or stylus across the touchscreen. The touch panel 111 may be a combination of a finger touch panel for detecting a finger gesture and a stylus touch panel for detecting a stylus gesture. Here, the finger touch panel may be implemented as a capacitive type panel. The finger touch panel also may be implemented as a resistive type panel, an infrared type panel, or a microwave type panel. The finger touch panel also may be configured to generate a touch event signal in response to a contact made by means of a conductive object as well as a contact made by the human body. The stylus touch panel may be implemented in the form of an electromagnetic induction type panel. In this latter case, the touch event signal is generated in response to the contact of a stylus pen manufactured to generate a magnetic field.

The display panel 112 converts video data input by the control unit 160 to an analog signal under the control of the control unit 160. That is, the display panel 112 displays various images, graphics, pictures, or combinations thereof, on the screen, such as a device lock screen, a home screen, a settings screen, an application (App) execution screen, and a keypad. The device lock screen is the screen displayed when the display panel 112 is first turned on. If a user gesture for unlocking the device is detected, the control unit 160 is capable of switching the device lock screen to the home screen or the application execution screen. The device lock screen may include at least one icon. Here, the icon is an object representing an application such as settings, browser, voice call, or messaging applications. The home screen may include a plurality of pages. The user may select a page to be displayed among the plurality of home screen pages. Each page is capable of including at least one application execution screen image. Each page is also capable of including at least one icon. Each page is also capable of including at least one application execution image and at least one icon. If an icon is selected (e.g. tapped) by the user, the control unit 160 executes the application represented by the selected icon and controls the display panel 112 to display the execution screen.

The display panel 112 displays one of the screens, such as a page of the home screen, as a background image, and another image such as a keypad is displayed as a foreground image over the background image under the control of the control unit 160. The display panel 112 is also capable of displaying multiple images without the images overlapping each other under the control of the control unit 160. For example, the display panel 112 is capable of displaying a first screen in a first screen region and a second screen in a second screen region. The display panel 112 can be implemented with any of a Liquid Crystal Display (LCD), an Organic Light Emitted Diode (OLED), or an Active Matrix OLED (AMOLED).

The key input unit 120 is provided with a plurality of keys (buttons) for inputting alphanumeric information and configuring various functions. These keys may include a menu call key, a screen on/off key, a power on/off key, a volume control key, and various additional keys. The key input unit 120 generates a key event signal in response to a touch applied to the touch panel 111. The key event signal may be related, for example, to user settings and device function controls, wherein the key event signal is received by the control unit 160. The key event may include a power on/off event, a volume control event, a screen on/off event, or any of a number of other events. The control unit 160 controls one or more components of the mobile device 100 in response to the key event signal. The keys (buttons) provided by the key input unit 120 can be referred to as hard keys (buttons), while the keys provided by the touchscreen 110 may be referred to as soft keys (buttons).

The storage unit 130 may include any of a disc, a Random Access Memory (RAM), a Read Only Memory (ROM), a flash memory, a secondary memory unit, or any other type of tangible, computer readable storage medium. The storage unit 130 is configured for storing the data generated in the mobile device 100 and received from external devices such as, for example, a server, a desktop PC, or a tablet PC, through the radio communication unit 140 or other external device interface (not shown). The storage unit 130 stores a key value table 131. The key value table 131 defines each of a plurality of respective key values mapped to corresponding sets of coordinates on the keypad presented by the touchscreen. That is, if a set of touch coordinates are determined from among the possible coordinates of the keypad, the control unit 160 retrieves the key value mapped to the set of touch coordinates from the key value table 131, and performs a function corresponding to the key value as, for example, entry of the letter "A". According to an embodiment of the present invention, the respective key values mapped to the corresponding coordinates of the keypad can be sorted into fixed key values and changeable key values. For example, the key value mapped to a first set of coordinates is fixed to "A" while the key value mapped to a second set of coordinates is set to an initial value "A", but is changeable to another value, such as "S". Of course, the value corresponding to the second set of coordinates can be reset to the initial value.

The storage unit 130 stores a boot-up program and an Operating System (OS) for operating the mobile device 100. The storage unit 130 also stores a touch input processing program. According to an embodiment of the present invention, the touch input processing program includes functions for generating the key value table corresponding to the displayed keypad, selecting a second set of coordinates that are within a predetermined threshold distance (e.g. 10 pixels) from a first set of coordinates representing the current touch coordinates (xₙ, yₙ), and changing the key value of the second set of coordinates to the key value of the first set of coordinates, and selecting, when the key value of the first set of coordinates corresponds to a backspace key, a previous set of coordinates denoted as (xₙ₋₁, yₙ₋₁), and resetting the key value of the second set of coordinates to an initial or default value. Here, the first set of coordinates are the coordinates which the control unit 160 has currently received from the touchscreen 110. The previous set of coordinates are different from the first set of coordinates, such that the previous set of coordinates were received immediately prior to the first set of coordinates.

That is, the previous set of coordinates corresponds to a touch that was sensed prior to the current touch at the first set of coordinates. The control unit 160 changes the key value whenever a new set of coordinates are detected by the key input unit 120. In cases where the current touch coordinates correspond to the backspace key, the control unit 160 resets the key value to the initial or default value corresponding to the previous touch coordinates (xₙ₋₁, yₙ₋₁).

The storage unit 130 may store embedded applications and third party applications. The embedded applications may represent one or more applications installed in the mobile device 100. For example, the embedded applications may include a browser, an email application, an instant messenger, or any of various other applications. The third party applications are applications that can be downloaded from online markets to be installed in the mobile device 100, and may include any of various types of applications. The third party applications may be installed and uninstalled freely. If the mobile device 100 powers on, the boot-up programs loads the OS onto the main memory device to operate the mobile device 100. The OS loads the application on the main memory device for execution. Since the boot-up and loading process is well known in the fields of software and computing, a further description of these items will not be provided herein.

The radio communication unit 140 is responsible for receiving and transmitting radio signals carrying any of voice calls, video calls, and data communication, with an external device under the control of the control unit 160. To accomplish these functions, the radio communication unit 140 includes a Radio Frequency (RF) transmitter for generating and amplifying a signal to be transmitted, and an RF receiver for amplifying and demodulating a received signal. The radio communication unit 140 may include a cellular communication module as, for example, a 3^{rd} Generation (3G) cellular communication module, a 3.5G cellular communication module, or a 4G cellular communication module. Alternatively or additionally, the radio communication unit 140 may include a digital broadcast module, such as a Digital Multimedia Broadcast (DMB) module. Alternatively or additionally, the radio communication unit 140 may include a short range communication module (e.g. Wi-Fi module, Bluetooth module, etc.).

The audio processing unit 150 includes a speaker (SPK) and a microphone (MIC) to support voice recognition, voice recording, digital recording, and audio signal input and output for voice communication. The audio processing unit 150 receives a digital audio signal, such as a voice signal or a signal that provides a notification of the detachment of an accessory or a connection of an external device, converts the digital audio signal to an analog audio signal, amplifies the analog audio signal, and outputs the analog audio signal to the speaker (SPK). The speaker SPK responds to the analog audio signal by producing an audible acoustical sound wave. The audio processing unit 150 converts an analog audio signal received through the microphone (MIC) to a digital audio signal and transfers the digital audio signal to the control unit 160. Thus, the speaker (SPK) converts the analog audio signal received from the audio processing unit 150 so as to output the audible acoustical sound wave. The microphone (MIC) converts acoustical sound waves of sound sources such as the human voice into an analog audio signal.

A description is provided of the technical features of the control unit 160 with reference to accompanying drawings. The control unit 160 controls the overall operation of the mobile device 100 as well as the signal flows among the internal components of the mobile device 100, data processing, and power supply from the battery to the various components of the mobile device 100. The control unit 160 may, but need not, be configured to include a main memory device for storing one or more applications and the OS, a cache memory for temporarily storing the data to be written to or read from the storage unit 130, a Central Processing Unit (CPU), a Graphic Processing Unit (GPU), or any of various combinations thereof. The OS works as interface between the hardware and the programs of the mobile device 100 and manages computer resources such as the CPU, GPU, main memory unit, and auxiliary memory unit. That is, the OS operates the mobile device 100, schedules tasks, and controls CPU and GPU operations. The OS is also responsible for controlling execution of application programs and data and file storage management. The CPU is the main control unit of the computer system for performing data operation and comparison and command interpretation and execution. The GPU is the graphic control unit responsible for graphic-related data operation and comparison and command interpretation and execution on behalf of the CPU. The CPU and GPU may, but need not, be integrated into a single package that provides two or more individual cores (for example, a quad core). The CPU and GPU may, but need not, be implemented in the form of System on Chip (SoC). The CPU and GPU may, but need not, be implemented as a multi-layer package. The integrated CPU and GPU may be referred to as Application Processor (AP).

Although it is impossible to enumerate all components available in line with digital convergence, the mobile device 100 may optionally include at least one of an acceleration sensor, a gyro sensor, a GPS module, a Near Field Communication (NFC) module, a vibration motor, a camera, an accessory, and an external device interface. Here, the accessory may be a detachable part of the mobile device such as stylus pen for use in association with the touchscreen 110. The external device interface may be configured for establishing a wire connection with an external device such as another terminal, a desktop PC, a laptop PC, a headphone, or an electric charger, and supporting data communication with the external device under the control of the control unit 160. The aforementioned components can be excluded or replaced by equivalent components according to the type of the mobile device 100.

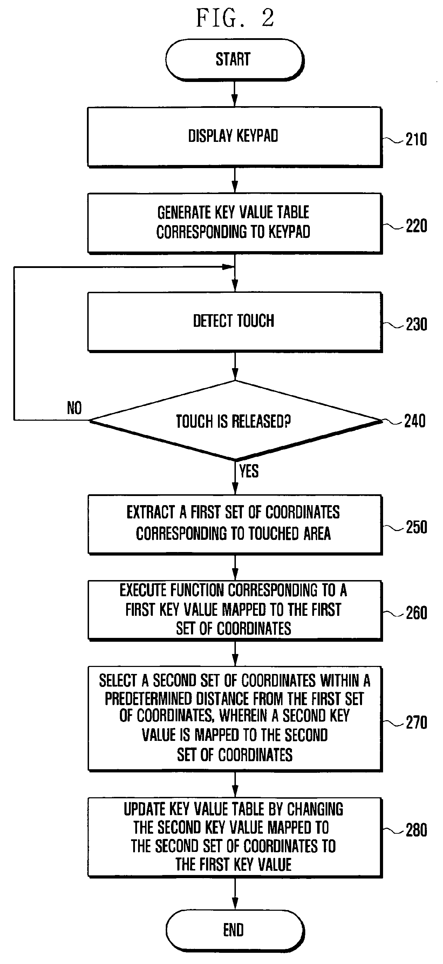

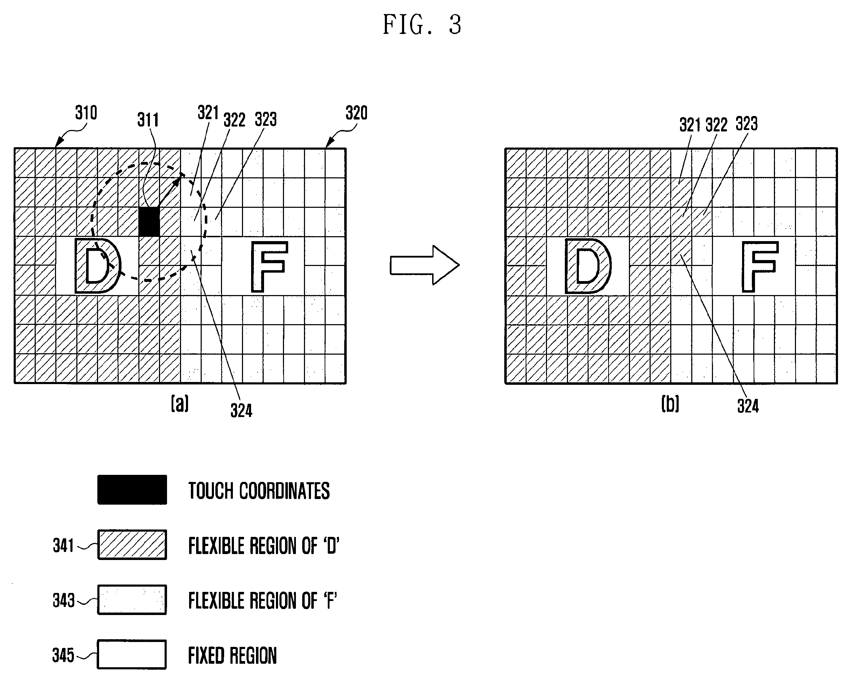

FIG. 2 is a flowchart illustrating an exemplary touch input processing method for a mobile device according to an embodiment of the present invention. FIG. 3 is a diagram illustrating a set of exemplary keypad images directed to the principle of processing a touch input using the touch input processing method of FIG. 2. Referring to FIGs. 1 and 2, the touchscreen 110 (FIG. 1) displays a keypad under the control of the control unit 160 at step 210 (FIG. 2). The control unit 160 (FIG. 1) generates a key value table corresponding to the displayed keypad at step 220 (FIG. 2). Alternatively or additionally, the control unit 160 may retrieve the key value table from the storage unit 130 (FIG. 1). Referring to FIG. 1 and part (a) of FIG. 3, the control unit 160 (FIG. 1) assigns an initial key value of "D" to a first area 310 (FIG. 3) of the keypad and assigns an initial key value of "F" to a second area 320. The first area 310 and the second area 320 are each divided into a fixed region 345 and a flexible region 341, 343, respectively. As depicted in the drawing, the fixed region 345 is positioned at the center of the corresponding area and includes one or more sets of fixed coordinates. The flexible region 341, 343, respectively, is positioned around the fixed region 345 and includes one or more sets of flexible coordinates.

The key value corresponding to each of the fixed coordinates is not changeable. In contrast, the key value corresponding to each of the flexible coordinates is changeable. Each set of coordinates comprising a coordinate pair is stored along with information on whether the key value corresponding to the set of coordinates is changeable, as well as an initial key value corresponding to the set of coordinates, and the current key value that is associated with the set of coordinates in the key value table. The control unit 160 (FIG. 1) stores the generated key value table in the storage unit 130.

The control unit 160 detects a touch applied to a touch area on the touchscreen 110 at step 230 (FIG. 2). For example, a touch event signal is received from the touchscreen 110 (FIG. 1), and the control unit 160 determines that a touch has occurred. As described previously, the touch event signal may include a plurality of coordinates. The coordinates are within the touch area contacted by the user's finger or the stylus pen. The touch event signal is also or alternatively capable of including a pair or set of coordinates. That is, the touchscreen 110 determines a pair or set of coordinates and sends the touch coordinates to the control unit 160.

The control unit 160 determines whether the applied touch has been released at step 240 (FIG. 2). For example, if no touch event is currently being received from the touchscreen 110 (FIG. 1), the control unit 160 determines that the touch has been released.

If it is determined that the touch is released, at step 250 (FIG. 2) the control unit 160 (FIG. 1) extracts a first set of coordinates 311 corresponding to the touch area at step 250. For example, the control unit 160 extracts the first set of coordinates 311 from the touch event signal received immediately prior to the release of the touch at step 240 (FIG. 2). The control unit 160 (FIG. 1) is also configured for determining a pair or set of coordinates selected from among a plurality of coordinate sets included in the touch event signal received immediately prior to the release of the touch.

The control unit 160 retrieves a first key value mapped to the first set of coordinates 311 (FIG. 3) from the key value table and performs a function corresponding to the retrieved first key value at step 260 (FIG. 2).

At step 270, the control unit 160 (FIG. 1) selects a second set of coordinates from an area that is within a predetermined threshold distance (e.g. 10 pixels) from the first set of coordinates 311, wherein a second key value is mapped to the second set of coordinates. Referring to part (a) of FIG. 3, the control unit 160 selects the second set of coordinates from a group of coordinate sets 321, 322, 323, 324 within the predetermined threshold distance. Each of the coordinate sets 321, 322, 323, 324 is associated with a corresponding key value that differs from the first key value that is mapped to the first set of coordinates.

Referring to part (b) of FIG. 3, the control unit 160 changes the second key value (for example, F) mapped to the second set of coordinates (where the second set of coordinates is denoted, for example, by any of the coordinate sets 321 to 324) to the first key value (for example, D) and updates the key value table by reflecting this change of key value at step 280 (FIG. 2). As a result of this key value table update, if a touch is subsequently applied to the position corresponding to any of the coordinate sets 321 to 324 (FIG. 3), the control unit 160 (FIG. 1) regards that the key input is D rather than F. Also, the fixed region 345 (FIG. 3) of the second area 320 can be included in the range of the predetermined threshold distance from the first set of coordinates 311. As described previously, however, the key value mapped to the fixed region 345 is not changed even when the corresponding coordinates are in the range of the predetermined distance from the first set of coordinates 311. That is, the control unit 160 changes the key value mapped to the coordinates of the flexible region 341, 343 within the range of the predetermined distance from the first set of coordinates 311.

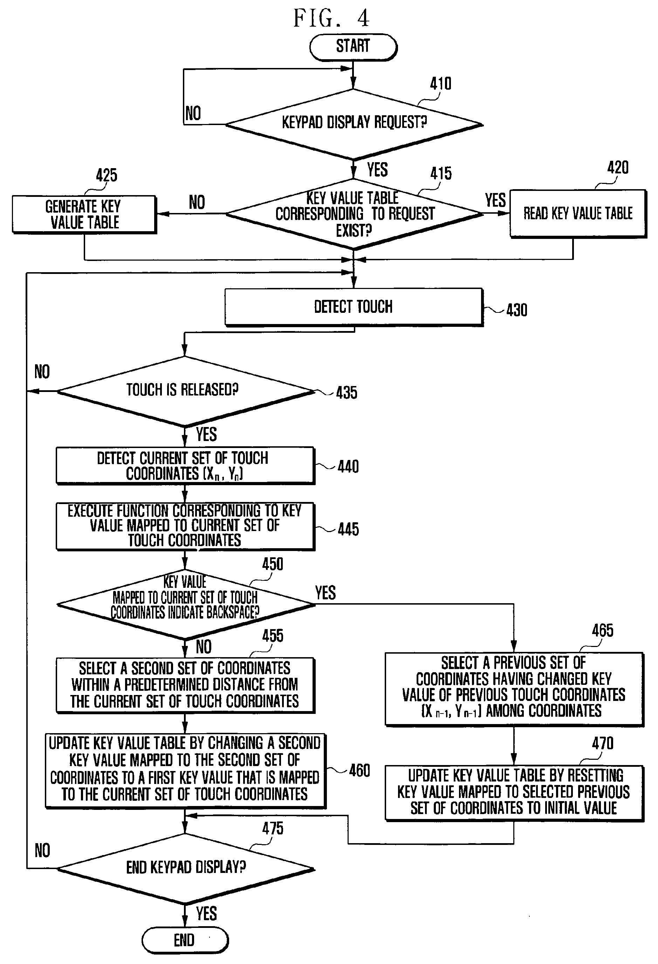

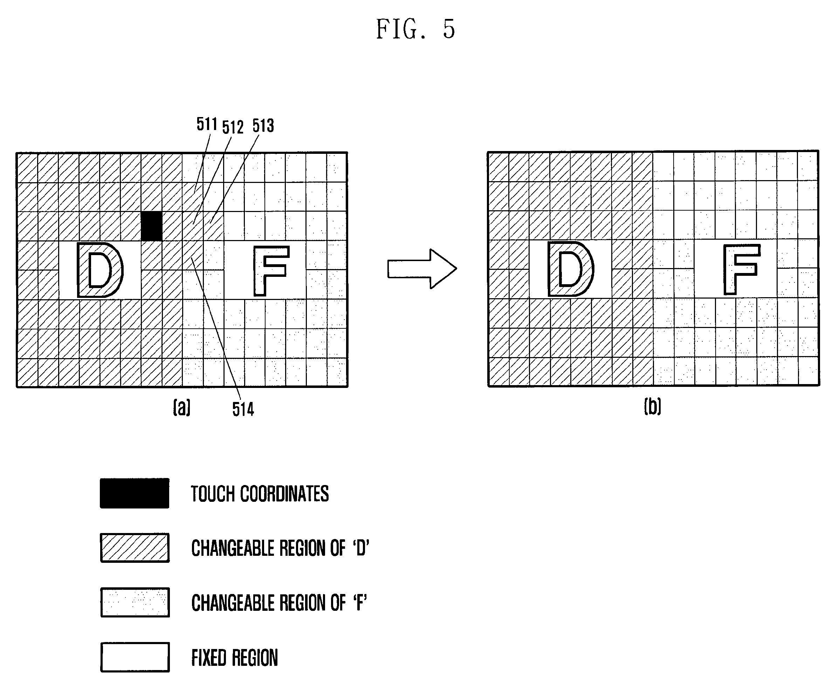

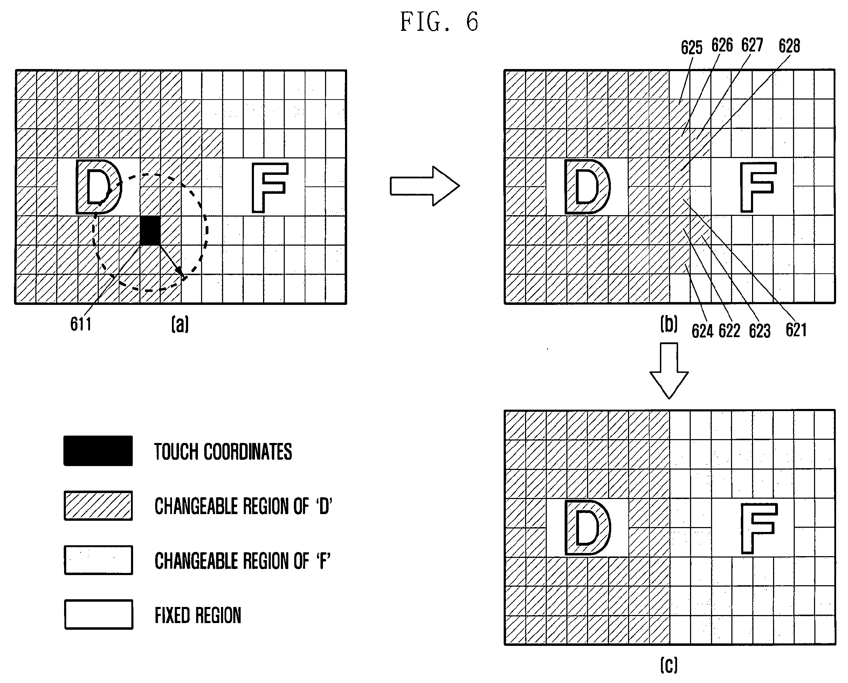

FIG. 4 is a flowchart illustrating a touch input processing method for a mobile device according to another exemplary embodiment of the present invention. FIGs. 5 and 6 are diagrams illustrating exemplary keypad images directed to the principle of processing a touch input using the touch input processing method of FIG. 4.

Referring to FIG. 4, the control unit 160 determines whether or not a keypad display request event signal is detected at step 410. For example, if the user applies a touch to a 'keypad display request button' presented on the touch screen 110 (FIG. 1), the touchscreen 110 generates a keypad display request event signal to the control unit 160 in response to the touch. The control unit 160 provides a display of a keypad on the touchscreen 110 in response to the keypad display request event signal. At this time, the keypad can be any of an English QWERTY keypad, an English 3x4 keypad, a Korean 3x4 keypad, or another type of keypad. A display mode of the touchscreen 110 can be switched between a landscape mode and a portrait mode. For cases in which the mobile device 100 is in the landscape mode, the control unit 160 controls the touchscreen 110 to display a landscape mode keypad. For cases in which the mobile device 100 is in the portrait mode, the control unit controls the touchscreen 100 display a portrait mode keypad. The key value table is generated and stored according to the display mode of the mobile device 100. The keypad display request event signal includes a keypad switching request. That is, the control unit 160 is configured for switching between keypads and between keypad presentation modes of portrait mode versus landscape mode in response to the keypad switching request.

The control unit 160 determines whether or not the key value table corresponding to the request event signal (e.g. display request signal or switching request signal) exists in the storage unit 130 at step 415 (FIG. 4). If the corresponding key value table exists in the storage unit 130 (FIG. 1), the control unit 160 retrieves the corresponding key value from the key value table at step 420 (FIG. 4). However, if no corresponding key value table exists in the storage unit 130 (FIG. 1), the control unit generates a key value table corresponding to the presented keypad at step 425 (FIG. 4).

Afterward, the control unit 160 (FIG. 1) detects a touch applied to the touchscreen 110 at step 430 (FIG. 4). The control unit 160 (FIG. 1) determines whether or not the touch has been released at step 435 (FIG. 4). If it is determined that the touch has been released (for example, an applied touch is no longer detected), the control unit 160 (FIG. 1) receives a current set of touch coordinates (xₙ, yₙ) from the touchscreen 110 at step 440 (FIG. 4). Next, the control unit 160 (FIG. 1) executes the function corresponding to the key value mapped to the set current set of touch coordinates at step 445 (FIG. 4).

Next, the control unit 160 (FIG. 1) determines whether or not the key value mapped to the current set of touch coordinates indicates a 'backspace' at step 450 (FIG. 4). If the key value does not indicate a 'backspace', the control unit 160 (FIG. 1) selects a second set of coordinates within a predetermined distance from the current set of touch coordinates at step 455 (FIG. 4). Next, the control unit 160 (FIG. 1) updates the key value table such that a second key value mapped to the selected second set of coordinates is changed to a first key value that is mapped to the current set of touch coordinates at step 460 (FIG. 4).

If it is determined at step 450 that the key value mapped to the current set of touch coordinates does indicate a 'backspace', the control unit 160 selects a previous set of coordinates corresponding to a key value mapped to an immediately preceding set of touch coordinates (xₙ₋₁, yₙ₋ᵢ) among the coordinates received by the keypad at step 645. That is, the previous set of coordinates were applied to the keypad prior to application of the current set of touch coordinates. At step 470 (FIG. 4), the control unit 160 resets the key value mapped to the selected previous set of coordinates to an initial or default key value to update the key value table.

Referring to the exemplary examples shown in parts (a) and (b) of FIG. 5, an initial or default key value mapped to each of coordinate sets 511 to 514 is "F". However, the current key value mapped to coordinate sets 511 to 514 is "D". If the current set of touch coordinates are one of the coordinate sets 511 to 514, the control unit 160 controls the touchscreen 110 to display "D". If the user selects the backspace key in a state wherein "D" is displayed on the touchscreen 110 (FIG. 1), the control unit 160 controls the touchscreen 110 to erase "D". Next, the control unit 160 resets the key value mapped to each of the coordinate sets 511 to 514 to the initial or default value, i.e. "F".

FIG. 6 presents a further illustrative example. If the previous set of touch coordinates are determined to be a first set of coordinates 611, the control unit 160 (FIG. 1) controls the touchscreen 110 to display a key value that is mapped to the first coordinates 611, i.e. a "D". The control unit 160 also changes the key value that is mapped to one or more additional sets of coordinates 621 to 624 within a predetermined distance from the first set of coordinates 611 for the key value mapped to the first set of coordinates 611. For example, the control unit 160 changes the key value mapped to the additional sets of coordinates 621 to 624 from "F" to "D". In this state, if the current touch coordinates are any of the additional sets of coordinates 621 to 624, or any of further additional coordinate sets 625 to 628, the control unit 160 controls the touchscreen 110 to display a "D". Here, the initial values of the sixth to ninth coordinates 625 to 628 are "D". If the user selects the backspace key after display of the "D", the control unit 160 controls the touchscreen 110 to erase the "D". The control unit 160 resets the key value mapped to the additional sets of coordinates 621-624 and the further sets of additional coordinates 625 to 628 to an initial or default value, i.e. "F".

As described above, the touch input processing method for mobile devices according to the present invention is configured for reducing a touch input error rate and improving an input speed by changing one or more key values mapped to coordinates on the touchscreen in adaptation to the user's applied touch.

The touch input processing method according to the present invention can be recorded in a tangible computer-readable storage media in the form of program commands executable by means of various types of computing means. Here, the computer-readable storage media can store the program commands, data files, and data structures independently or in the form of any of various combinations. The program commands recorded in the storage media may be designed and configured for use to implement exemplary embodiments of the present invention. The computer-readable media may be magnetic media such as a hard disk, a floppy disk and magnetic tape, optical media such as a compact disk read-only memory (CD-ROM) and a digital versatile disk (DVD), magneto-optical media such as floppy or optical disk, or hardware devices such as a ROM, a random-access memory (RAM), a flash memory, etc., particularly implemented to store and execute program commands. The program commands may be machine language codes produced by a compiler and high-level language codes that can be executed by computers using an interpreter, etc. In order to perform the operations of the present invention, the hardware devices may be configured to operate as at least one software module, and vice versa.

The mobile device and touch input processing method thereof can be practiced by those skilled in the art without departing from the scope of the appended claims.

## Claims

1. A method for processing a touch input applied to a mobile device (100) equipped with a touchscreen (110), the method comprising:
displaying a keypad (210) on the touchscreen (110);
detecting a touch (230) applied to the touchscreen (110);
in response to the touch being released, extracting a first set of coordinates (250) for the touchscreen (110) corresponding to the detected touch;
executing a function (260) corresponding to a first key value mapped to the first set of coordinates from a key value table corresponding to the keypad; and
updating the key value table (280) by changing a second key value for a second set of coordinates to the first key value, wherein the second set are within a predetermined threshold distance from the first set and the second key value is mapped to the second set, **characterized in that** the updating comprises changing the key value of one or more sets of changeable coordinates within the predetermined threshold distance of the first set of coordinates to the first key value without changing the key value of one or more sets of non-changeable coordinates within the predetermined threshold distance of the first set of coordinates.

2. The method of claim 1, further comprising:
detecting a subsequent touch on the touch screen (110) after updating the key value table;
in response to the subsequent touch being released, extracting a subsequent set of touch coordinates in a subsequent touch area; and
in response to a key value mapped to the subsequent set of touch coordinates indicating a backspace, further updating the key value table by resetting the first key value for the second coordinates to the second key value, wherein the second key value represents an initial or default key value.

3. The method of claim 1, wherein the one or more sets of changeable coordinates and the one or more sets of non-changeable coordinates are stored in the key value table, each of the one or more sets of changeable coordinates and each of the one or more sets of non-changeable coordinates being associated with a key value changeability parameter, an initial or default key value, and a current key value.

4. The method of claim 1, wherein the one or more sets of non-changeable coordinates are included in a fixed region (345) which is positioned at a center of an area which includes sets of coordinates initially mapped to the second key value, and the one or more sets of changeable coordinates are included in a flexible region (341, 343) which is positioned around the fixed region (345) and within the area.

5. The method of claim 1, wherein the displaying comprises:
detecting a keypad display request event (410) on the touchscreen;
presenting a keypad corresponding to the keypad display request event; and
retrieving from a storage unit the key value table corresponding to the presented keypad.

6. A mobile device (100) comprising:
a touchscreen (110) configured to display a keypad;
a storage unit (130) configured to store a key value table corresponding to the keypad; and
a control unit (160) configured to detect a touch applied to the touchscreen, and in response to the touch being released to extract a first set of coordinates, to execute a function corresponding to a first key value mapped to the first set of coordinates from a key value table corresponding to the keypad, and to update the key value table by changing a second key value for a second set of coordinates to the first key value, wherein the second set are within a predetermined threshold distance from the first set and the second key value is mapped to the second set, **characterized in that** the control unit (160) is configured to change the key value of one or more sets of changeable coordinates within the predetermined threshold distance of the first set of coordinates to the first key value without changing the key value of one or more sets of non-changeable coordinates within the predetermined threshold distance of the first set of coordinates.

7. The mobile device (100) of claim 6, wherein the control unit (160) is configured to detect a subsequent touch on the touch screen after updating the key value table to extract, when the subsequent touch is released, a set of subsequent touch coordinates in a subsequent touch area, and in response to a key value mapped to the set of subsequent touch coordinates indicating a backspace, to further update the key value table by resetting the first key value for the second coordinates to the second key value, wherein the second key value represents an initial or default key value.

8. The mobile device (100) of claim 6, wherein the one or more sets of changeable coordinates and the one or more sets of non-changeable coordinates are stored in the key value table, each of the one or more sets of changeable coordinates and each of the one or more sets of non-changeable coordinates being associated with a key value changeability parameter, an initial or default key value, and a current key value.

9. The mobile device (100) of claim 6, wherein the one or more sets of non-changeable coordinates are included in a fixed region (345) which is positioned at a center of an area which includes sets of coordinates initially mapped to the second key value, and the one or more sets of changeable coordinates are included in a flexible region (341, 341) which is positioned around the fixed region (345) and within the area.

10. The mobile device (100) of claim 6, wherein the control unit (160) is configured to detect a keypad display request event on the touchscreen (110), to present a keypad corresponding to the keypad display request event, and to retrieve from the storage unit (130) the key value table corresponding to the presented keypad.

11. A tangible computer-readable storage medium carrying one or more sequences of one or more instructions which, when executed by one or more processors, cause, at least in part, an apparatus to:
display a keypad on a touchscreen;
store a key value table corresponding to the keypad; and
detect a touch applied to the touchscreen, and in response to the touch being released, extract a first set of coordinates, execute a function corresponding to a first key value mapped to the first set of coordinates from a key value table corresponding to the keypad, and update the key value table by changing a second key value for a second set of coordinates to the first key value, wherein the second set are within a predetermined threshold distance from the first set and the second key value is mapped to the second set, **characterized in that** the computer-readable storage medium further comprises instructions for changing the key value of one or more sets of changeable coordinates within the predetermined threshold distance of the first set of coordinates to the first key value without changing the key value of one or more sets of non-changeable coordinates within the predetermined threshold distance of the first set out coordinates.

12. The tangible computer-readable storage medium of claim 11, further comprising instructions for detecting a subsequent touch on the touch screen after updating the key value table, extracting, when the subsequent touch is released, a set of subsequent touch coordinates in a subsequent touch area, and in response to a key value mapped to the set of subsequent touch coordinates indicating a backspace, further updating the key value table by resetting the first key value for the second coordinates to the second key value, wherein the second key value represents an initial or default key value.

## Patentansprüche

1. Verfahren zum Verarbeiten einer Berührungseingabe, die auf einer mobilen Vorrichtung (100) ausgeführt wird, die mit einem Berührungsbildschirm (110) ausgestattet ist, wobei das Verfahren Folgendes umfasst:
Anzeigen eines Tastenfelds (210) auf dem Berührungsbildschirm (110);
Erfassen einer Berührung (230), die auf dem Berührungsbildschirm (110) ausgeführt wird;
als Reaktion auf die Freigabe der Berührung, Extrahieren eines ersten Satzes von Koordinaten (250) für den Berührungsbildschirm (110), die der erfassten Berührung entsprechen;
Ausführen einer Funktion (260), die einem ersten Tastenwert entspricht, der für den ersten Satz von Koordinaten einer Tastenwerttabelle abgebildet ist, die dem Tastenfeld entspricht; und
Aktualisieren der Tastenwerttabelle (280) durch Austauschen eines zweiten Tastenwerts für einen zweiten Satz von Koordinaten gegen den ersten Tastenwert, wobei sich der zweite Satz innerhalb eines vorgegebenen Schwellenabstands von dem ersten Satz befindet und der zweite Tastenwert für den zweiten Satz abgebildet ist, **dadurch gekennzeichnet, dass** die Aktualisierung ferner Folgendes umfasst: Austauschen des Tastenwerts eines oder mehrerer Sätze von veränderlichen Koordinaten innerhalb des vorbestimmten Schwellenabstands des ersten Satzes von Koordinaten gegen den ersten Tastenwert, ohne den Tastenwert eines oder mehrerer Sätze von nicht-veränderlichen Koordinaten innerhalb des vorbestimmten Schwellenabstands des ersten Satzes von Koordinaten auszutauschen.

2. Verfahren nach Anspruch 1, das ferner Folgendes umfasst:
Erfassen einer nachfolgenden Berührung auf dem Berührungsbildschirm (110), nachdem die Tastenwerttabelle aktualisiert wurde;
als Reaktion auf die Freigabe der nachfolgenden Berührung, Extrahieren eines nachfolgenden Satzes von Berührungskoordinaten in einem nachfolgenden Berührungsbereich; und als Reaktion auf einen Tastenwert, der für den nachfolgenden Satz von Berührungskoordinaten abgebildet ist, Anzeigen einer Rücktaste, ferner Aktualisieren der Tastenwerttabelle, indem der erste Tastenwert für die zweiten Koordinaten auf den zweiten Tastenwert zurückgesetzt wird, wobei der zweite Tastenwert einen Anfangs- oder Standard-Tastenwert darstellt.

3. Verfahren nach Anspruch 1, wobei der eine oder die mehreren Sätze von veränderlichen Koordinaten und der eine oder die mehreren Sätze von nicht-veränderlichen Koordinaten in der Tastenwerttabelle gespeichert sind, wobei jeder des einen oder der mehreren Sätze von veränderlichen Koordinaten und jeder des einen oder der mehreren Sätze von nicht-veränderlichen Koordinaten Folgendem zugeordnet ist: einem Tastenwertveränderlichkeitsparameter, einem Anfangs- oder Standard-Tastenwert und einem aktuellen Tastenwert.

4. Verfahren nach Anspruch 1, wobei der eine oder die mehreren Sätze von nicht-veränderlichen Koordinaten in einer festgelegten Region (345) enthalten sind, die in einer Mitte eines Bereichs angeordnet ist, der Sätze von Koordinaten umfasst, die anfänglich für den zweiten Tastenwert abgebildet sind, und wobei der eine oder die mehreren Sätze von veränderlichen Koordinaten in einer flexiblen Region (341, 343) enthalten sind, die um die festgelegte Region (345) herum und innerhalb des Bereichs angeordnet ist.

5. Verfahren nach Anspruch 1, wobei der Anzeigevorgang Folgendes umfasst:
Erfassen eines Tastenfeldanzeigeanforderungsereignisses (410) auf dem Berührungsbildschirm;
Darstellen eines Tastenfelds, das dem Tastenfeldanzeigeanforderungsereignis entspricht; und
Abrufen von einer Speichereinheit der Tastenwerttabelle, die dem dargestellten Tastenfeld entspricht.

6. Mobile Vorrichtung (100), die Folgendes umfasst:
einen Berührungsbildschirm (110), der dafür konfiguriert ist, ein Tastenfeld anzuzeigen;
eine Speichereinheit (130), die dafür konfiguriert ist, eine Tastenwerttabelle zu speichern, die dem Tastenfeld entspricht; und
eine Steuereinheit (160), die dafür konfiguriert ist, eine Berührung zu erfassen, die auf dem Berührungsbildschirm ausgeführt wird, und als Reaktion auf die Freigabe der Berührung, Extrahieren eines ersten Satzes von Koordinaten, Ausführen einer Funktion, die einem ersten Tastenwert entspricht, der für den ersten Satz von Koordinaten einer Tastenwerttabelle abgebildet ist, die dem Tastenfeld entspricht, und Aktualisieren der Tastenwerttabelle durch Austauschen eines zweiten Tastenwerts für einen zweiten Satz von Koordinaten gegen den ersten Tastenwert, wobei der zweite Satz innerhalb eines vorgegebenen Schwellenabstands von dem ersten Satz angeordnet ist und der zweite Tastenwert für den zweiten Satz abgebildet ist, **dadurch gekennzeichnet, dass** die Steuereinheit (160) für Folgendes konfiguriert ist: Austauschen des Tastenwerts eines oder mehrerer Sätze von veränderlichen Koordinaten innerhalb des vorbestimmten Schwellenabstands des ersten Satzes von Koordinaten gegen den ersten Tastenwert, ohne den Tastenwert eines oder mehrerer Sätze von nicht-veränderlichen Koordinaten innerhalb des vorbestimmten Schwellenabstands des ersten Satzes von Koordinaten auszutauschen.

7. Mobile Vorrichtung (100) nach Anspruch 6, wobei die Steuereinheit (160) dafür konfiguriert ist, eine nachfolgende Berührung auf dem Berührungsbildschirm nach der Aktualisierung der Tastenwerttabelle zu erfassen, um einen Satz von nachfolgenden Berührungskoordinaten in einem nachfolgenden Berührungsbereich zu extrahieren, wenn die nachfolgende Berührung freigegeben wird, und als Reaktion auf einen Tastenwert, der für den Satz von nachfolgenden Berührungskoordinaten abgebildet ist, Anzeigen einer Rücktaste, ferner Aktualisieren der Tastenwerttabelle, indem der erste Tastenwert für die zweiten Koordinaten auf den zweiten Tastenwert zurückgesetzt wird, wobei der zweite Tastenwert einen Anfangs- oder Standard-Tastenwert darstellt.

8. Mobile Vorrichtung (100) nach Anspruch 6, wobei der eine oder die mehreren Sätze von veränderlichen Koordinaten und der eine oder die mehreren Sätze von nicht-veränderlichen Koordinaten in der Tastenwerttabelle gespeichert sind, wobei jeder des einen oder der mehreren Sätze von veränderlichen Koordinaten und jeder des einen oder der mehreren Sätze von nicht-veränderlichen Koordinaten Folgendem zugeordnet ist: einem Tastenwertveränderlichkeitsparameter, einem Anfangs- oder Standard-Tastenwert und einem aktuellen Tastenwert.

9. Mobile Vorrichtung (100) nach Anspruch 6, wobei der eine oder die mehreren Sätze von nicht-veränderlichen Koordinaten in einer festgelegten Region (345) enthalten sind, die in einer Mitte eines Bereichs angeordnet ist, der Sätze von Koordinaten umfasst, die anfänglich für den zweiten Tastenwert abgebildet sind, und der eine oder die mehreren Sätze von veränderlichen Koordinaten in einer flexiblen Region (341, 341) enthalten sind, die um die festgelegte Region (345) herum und innerhalb des Bereichs angeordnet ist.

10. Mobile Vorrichtung (100) nach Anspruch 6, wobei die Steuereinheit (160) für Folgendes konfiguriert ist: Erfassen eines Tastenfeldanzeigeanforderungsereignisses auf dem Berührungsbildschirm (110), Darstellen eines Tastenfelds, das dem Tastenfeldanzeigeanforderungsereignis entspricht, und Abrufen von der Speichereinheit (130) der Tastenwerttabelle, die dem dargestellten Tastenfeld entspricht.

11. Physikalisches computerlesbares Speichermedium, das eine oder mehrere Sequenzen einer oder mehrerer Anweisungen speichert, die bei Ausführung durch einen oder mehrere Prozessoren eine Vorrichtung zumindest teilweise zu Folgendem veranlassen:
Anzeigen eines Tastenfelds auf einem Berührungsbildschirm;
Speichern einer Tastenwerttabelle, die dem Tastenfeld entspricht; und
Erfassen einer Berührung, die auf dem Berührungsbildschirm ausgeführt wird, und als Reaktion auf die Freigabe der Berührung: Extrahieren eines ersten Satzes von Koordinaten, Ausführen einer Funktion, die einem ersten Tastenwert entspricht, der für den ersten Satz von Koordinaten einer Tastenwerttabelle abgebildet ist, die dem Tastenfeld entspricht, und Aktualisieren der Tastenwerttabelle durch Austauschen eines zweiten Tastenwerts für einen zweiten Satz von Koordinaten gegen den ersten Tastenwert, wobei der zweite Satz innerhalb eines vorgegebenen Schwellenabstands von dem ersten Satz angeordnet ist und der zweite Tastenwert für den zweiten Satz abgebildet ist, **dadurch gekennzeichnet, dass** das computerlesbare Speichermedium ferner Folgendes umfasst: Anweisungen zum Austauschen des Tastenwerts eines oder mehrerer Sätze von veränderlichen Koordinaten innerhalb des vorbestimmten Schwellenabstands des ersten Satzes von Koordinaten gegen den ersten Tastenwert ohne den Tastenwert eines oder mehrerer Sätze von nicht-veränderlichen Koordinaten innerhalb des vorbestimmten Schwellenabstands des ersten Satzes von Koordinaten auszutauschen.

12. Physikalisches computerlesbares Speichermedium nach Anspruch 11, das ferner Anweisungen für Folgendes umfasst: Erfassen einer nachfolgenden Berührung auf dem Berührungsbildschirm, nachdem die Tastenwerttabelle aktualisiert wurde, Extrahieren eines nachfolgenden Satzes von Berührungskoordinaten in einem nachfolgenden Berührungsbereich, und als Reaktion auf einen Tastenwert, der für den nachfolgenden Satz von Berührungskoordinaten abgebildet ist, Anzeigen einer Rücktaste, ferner Aktualisieren der Tastenwerttabelle, indem der erste Tastenwert für die zweiten Koordinaten auf den zweiten Tastenwert zurückgesetzt wird, wobei der zweite Tastenwert einen Anfangs- oder Standard-Tastenwert darstellt.

## Revendications

1. Un procédé de traitement d'une entrée tactile appliquée à un dispositif mobile (100) équipé d'un écran tactile (110), le procédé comprenant :
l'affichage d'un clavier (210) sur l'écran tactile (110),
la détection d'un contact tactile (230) appliqué à l'écran tactile (110),
en réponse à la libération du contact tactile, l'extraction d'un premier ensemble de coordonnées (250) pour l'écran tactile (110) correspondant au contact tactile détecté,
l'exécution d'une fonction (260) correspondant à une première valeur de touche mise en correspondance avec le premier ensemble de coordonnées à partir d'une table de valeurs de touche correspondant au clavier, et
l'actualisation de la table de valeurs de touche (280) par la modification d'une deuxième valeur de touche pour un deuxième ensemble de coordonnées vers la première valeur de touche, où le deuxième ensemble se situe à l'intérieur d'une distance seuil prédéterminée du premier ensemble et la deuxième valeur de touche est mise en correspondance avec le deuxième ensemble, **caractérisé en ce que** l'actualisation comprend la modification de la valeur de touche d'un ou de plusieurs ensembles de coordonnées modifiables à l'intérieur de la distance seuil prédéterminée du premier ensemble de coordonnées vers la première valeur de touche sans la modification de la valeur de touche d'un ou de plusieurs ensembles de coordonnées non modifiables à l'intérieur de la distance seuil prédéterminée du premier ensemble de coordonnées.

2. Le procédé selon la Revendication 1, comprenant en outre :
la détection d'une contact tactile subséquent sur l'écran tactile (110) après l'actualisation de la table de valeurs de touche,
en réponse à la libération du contact tactile subséquent, l'extraction d'un ensemble subséquent de coordonnées de contact tactile dans une zone de contact tactile subséquente, et
en réponse à une valeur de touche mise en correspondance avec l'ensemble subséquent de coordonnées de contact tactile indiquant un espace arrière, l'actualisation à nouveau de la table de valeurs de touche par la redéfinition de la première valeur de touche pour les deuxièmes coordonnées sur la deuxième valeur de touche, où la deuxième valeur de touche représente une valeur de touche initiale ou par défaut.

3. Le procédé selon la Revendication 1, où les un ou plusieurs ensembles de coordonnées modifiables et les un ou plusieurs ensembles de coordonnées non modifiables sont conservés en mémoire dans la table de valeurs de touche, chacun des un ou plusieurs ensembles de coordonnées modifiables et chacun des un ou plusieurs ensembles de coordonnées non modifiables étant associés à un paramètre de variabilité de valeur de touche, une valeur de touche initiale ou par défaut et une valeur de touche courante.

4. Le procédé selon la Revendication 1, où les un ou plusieurs ensembles de coordonnées non modifiables sont inclus dans une zone fixe (345) qui est positionnée au niveau d'un centre d'une zone qui comprend des ensembles de coordonnées initialement mis en correspondance avec la deuxième valeur de touche et les un ou plusieurs ensembles de coordonnées modifiables sont inclus dans une zone flexible (341, 343) qui est positionnée autour de la zone fixe (345) et à l'intérieur de la zone.

5. Le procédé selon la Revendication 1, où l'affichage comprend :
la détection d'un événement de demande d'affichage de clavier (410) sur l'écran tactile,
la présentation d'un clavier correspondant à l'événement de demande d'affichage de clavier, et
la récupération à partir d'une unité à mémoire de la table de valeurs de touche correspondant au clavier présenté.

6. Un dispositif mobile (100) comprenant :
un écran tactile (110) configuré de façon à afficher un clavier,
une unité à mémoire (130) configurée de façon à conserver en mémoire une table de valeurs de touche correspondant au clavier, et
une unité de commande (160) configurée de façon à détecter un contact tactile appliqué à l'écran tactile, et en réponse à la libération du contact tactile, à extraire un premier ensemble de coordonnées, à exécuter une fonction correspondant à une première valeur de touche mise en correspondance avec le premier ensemble de coordonnées à partir d'une table de valeurs de touche correspondant au clavier, et à actualiser la table de valeurs de touche par la modification d'une deuxième valeur de touche pour un deuxième ensemble de coordonnées vers la première valeur de touche, où le deuxième ensemble se situe à l'intérieur d'une distance seuil prédéterminée du premier ensemble et la deuxième valeur de touche est mise en correspondance avec le deuxième ensemble,
**caractérisé en ce que** l'unité de commande (160) est configurée de façon à modifier la valeur de touche d'un ou de plusieurs ensembles de coordonnées modifiables à l'intérieur de la distance seuil prédéterminée du premier ensemble de coordonnées vers la première valeur de touche sans la modification de la valeur de touche d'un ou de plusieurs ensembles de coordonnées non modifiables à l'intérieur de la distance seuil prédéterminée du premier ensemble de coordonnées.

7. Le dispositif mobile (100) selon la Revendication 6, où l'unité de commande (160) est configurée de façon à détecter un contact tactile subséquent sur l'écran tactile après l'actualisation de la table de valeurs de touche, de façon à extraire, lorsque le contact tactile subséquent est libéré, un ensemble de coordonnées de contact tactile subséquent dans une zone de contact tactile subséquente, et en réponse à une valeur de touche mise en correspondance avec l'ensemble de coordonnées de contact tactile subséquent indiquant un espace arrière, de façon à actualiser à nouveau la table de valeurs de touche par la redéfinition de la première valeur de touche pour les deuxièmes coordonnées vers la deuxième valeur de touche, où la deuxième valeur de touche représente une valeur de touche initiale ou par défaut.

8. Le dispositif mobile (100) selon la Revendication 6, où les un ou plusieurs ensembles de coordonnées modifiables et les un ou plusieurs ensembles de coordonnées non modifiables sont conservés en mémoire dans la table de valeurs de touche, chacun des un ou plusieurs ensembles de coordonnées modifiables et chacun des un ou plusieurs ensembles de coordonnées non modifiables étant associés à un paramètre de variabilité de valeur de touche, une valeur de touche initiale ou par défaut et une valeur de touche courante.

9. Le dispositif mobile (100) selon la Revendication 6, où les un ou plusieurs ensembles de coordonnées non modifiables sont inclus dans une zone fixe (345) qui est positionnée au niveau d'un centre d'une zone qui comprend des ensembles de coordonnées initialement mis en correspondance avec la deuxième valeur de touche, et les un ou plusieurs ensembles de coordonnées modifiables sont inclus dans une zone flexible (341, 341) qui est positionnée autour de la zone fixe (345) et à l'intérieur de la zone.

10. Le dispositif mobile (100) selon la Revendication 6, où l'unité de commande (160) est configurée de façon à détecter un événement de demande d'affichage de clavier sur l'écran tactile (110), à présenter un clavier correspondant à l'événement de demande d'affichage de clavier et à récupérer de l'unité à mémoire (130) la table de valeurs de touche correspondant au clavier présenté.

11. Un support à mémoire tangible lisible par ordinateur contenant une ou plusieurs séquences d'une ou de plusieurs instructions qui, lorsqu'elles sont exécutées par un ou plusieurs processeurs, amènent, au moins en partie, un appareil à :
afficher un clavier sur un écran tactile,
conserver en mémoire une table de valeurs de touche correspondant au clavier, et
détecter un contact tactile appliqué à l'écran tactile, et en réponse à la libération du contact tactile, extraire un premier ensemble de coordonnées, exécuter une fonction correspondant à une première valeur de touche mise en correspondance avec le premier ensemble de coordonnées à partir d'une table de valeurs de touche correspondant au clavier et actualiser la table de valeurs de touche par la modification d'une deuxième valeur de touche pour un deuxième ensemble de coordonnées vers la première valeur de touche, où le deuxième ensemble se situe à l'intérieur d'une distance seuil prédéterminée du premier ensemble et la deuxième valeur de touche est mise en correspondance avec le deuxième ensemble, **caractérisé en ce que** le support à mémoire lisible par ordinateur comprend en outre des instructions destinées à la modification de la valeur de touche d'un ou de plusieurs ensembles de coordonnées modifiables à l'intérieur de la distance seuil prédéterminée du premier ensemble de coordonnées vers la première valeur de touche sans la modification de la valeur de touche d'un ou de plusieurs ensembles de coordonnées non modifiables à l'intérieur de la distance seuil prédéterminée du premier ensemble de coordonnées.

12. Le support à mémoire tangible lisible par ordinateur selon la Revendication 11, comprenant en outre des instructions destinées à la détection d'un contact tactile subséquent sur l'écran tactile après l'actualisation de la table de valeurs de touche, à l'extraction, lorsque le contact tactile subséquent est libéré, d'un ensemble de coordonnées de contact tactile subséquent dans une zone de contact tactile subséquente, et en réponse à une valeur de touche mise en correspondance avec l'ensemble de coordonnées de contact tactile subséquent indiquant un espace arrière, l'actualisation à nouveau de la table de valeurs de touche par la redéfinition de la première valeur de touche pour les deuxièmes coordonnées vers la deuxième valeur de touche, où la deuxième valeur de touche représente une valeur de touche initiale ou par défaut.
